# EUROPEAN PATENT SPECIFICATION

(11) **EP 2 442 978 B1**
(45) Date of publication and mention of the grant of the patent: **12.03.2014**
(21) Application number: 10725696.8
(22) Date of filing: 17.06.2010
(51) Int. Cl.: B32B 17/10, C03C 27/12, C08K 5/521, C08L 29/14

(54) **Interlayer film for laminated glass having IR-absorbing properties and low haze**
Zwischenschichtfolie für Verbundglas mit IR-Absorptionseigenschaften und geringer Trübung
Film intercalaire pour verre stratifié ayant des propriétés absorbantes pour l'infrarouge et faible voile

(30) Priority: 17.06.2009 EP 09162996
(43) Date of publication of application: 25.04.2012
(73) Proprietor: Kuraray Europe GmbH, 65795 Hattersheim (DE); Kuraray Co., Ltd., Okayama 710-0801 (JP)
(72) Inventor: BEEKHUIZEN, Jan, 53844 Troisdorf (DE); MORIKAWA, Keisuke, Okayama 710-8691 (JP); AMANO, Yusuke, Okayama 710-8691 (JP)
(74) Representative: Kisters, Michael Marcus
(86) International application number: PCT/EP2010/058521
(87) International publication number: WO 2010/146107

(56) References cited:
- EP-A1- 1 666 559
- EP-A1- 1 857 424
- JP-A- 2007 153 691
- US-A1- 2004 234 778

## Description

### Technical Field

The present invention relates to an interlayer film containing homogeneously distributed nano-scale IR-absorbing particles. The films are useful for the production of laminated glazing having heat-shielding properties. The invention also relates to methods for manufacturing the film.

### Prior Art

The use of an intermediate film for production of laminated glass is long known in the art. Laminated glass is widely used in automobiles, aircrafts or architectural applications and is optically transparent for the visible and the near infrared fraction of the sunlight. IR radiation passed through the glazing is the main reason for undesired temperature increase of the interior of cars or buildings, which has to be removed by energy-consuming air-condition.

It is also long known in the art to use coated glass to remove at least a part of the IR-radiation from the sunlight by partial reflection of the sunlight. Coated glass is expensive and the coating has mechanical deficiencies.

Interlayer films with IR-absorbing properties for the production of heat-shielding laminated glazing are also known. Such films contain IR-absorbing materials like antimony doped tin oxide (ATO) or indium doped tin oxide (ITO) in small scale particles. The particles must be dispersed homogenously in the interlayer film in order to prevent haze due to agglomeration of the particles. Furthermore, the particles must be smaller than the wave length of the visible light (i.e. smaller than 300 nm), otherwise the optical transparency of the laminated glass is unsatisfactory.

The production of IR-absorbing interlayer films is for example disclosed in EP 1 419 999 A1, EP 1 795 508 A1 or EP 1 785 404 A1. These publications disclose for the production of films the following steps: first, provide a dispersion of the IR-absorbing particles for example in a plasticizer, second mixing the dispersion of the IR-absorbing particles, a polymer matrix (usually polyvinyl butyral) and optionally with a plasticizer and third, shaping of a film from the mixture usually by way of extrusion. A common problem of this method is that small scale particles tend to re-agglomerate in the dispersion or in the polymer matrix resulting in an unacceptable haze of the film or the final laminated product.

It was therefore an object of the invention to provide an interlayer film having IR-absorbing properties and excellent optical properties by preventing the agglomeration of nano-scale IR-absorbing particles.

Surprisingly it was found that mono or dibasic phosphate ester are especially suitable as dispersing agents to stabilize a homogeneous distribution of IR-absorbing particles in a film based on plasticized polyvinyl acetal.

### Disclosure of the invention

The object of the invention is a interlayer film for safety glazing, comprising
- 40 to 80 Wght.% of an least one polyvinyl acetal
- 15 to 35 Wght.% of at least one plasticizer
- 0,01 to 10 Wght.% , preferable 0,05 to 5 Wght.% , more preferable 0,1 to 3 Wght.% IR-radiation absorbing particles and
- 0,001 to 10 Wght.% %, preferable 0,001 to 5 Wght.% , preferable 0,01 to 3 Wght.% , more preferable 0,01 to 1 Wght.% of at least one mono acidic phosphate ester compound and/or dibasic acidic phosphate ester compound as dispersing agent.

Although the mono- or dibasic acidic phosphate ester compounds have acidic properties, no negative influence on the adhesion or yellowness of the film can be observed. In the amounts mentioned above, they are compatible with the polymer matrix and do not cause sweat-out of the plasticizer or formation of haze.

Especially useful as dispersion agent are compounds according to the following formula (I)

(HO)₃₋ₓ-P(O)-(OR)ₓI

with R = a branched or linear, aliphatic or cycloaliphatic hydrocarbon chain containing at least one carboxylic-group and/or at least one ether function and having a molecular weight of 100-10000, and x = 1 or 2. R may consist of an ethoxylated alcohol residue with 3-22 carbon atoms like ethoxylated laurylic alcohol, an ethoxylated nonylphenol residue with Mn of 160-1000, a methoxy polyethylenglycol residue with Mn of 300-1000, or an di- or tri-propylenglycolmonomethylether residue. X can be 1 or 2.

Especially useful as dispersing agent are mono- or dibasic acidic phosphate ester compounds having a HLB value of 7 to 19. The HLB value is an empirical value to characterise the hydrophobicity of a molecule, especially tensides, according to their hydrophobic and hydrophilic groups. The HLB values of the present invention are calculated according to Griffin and Stache, Tensid-Taschenbuch (1979), 70-72 with the formula HLB=20*(1-Mhp/M), wherein Mhp= molecular weight of the hydrophobic part of the molecule and M= molecular weight of the molecule and may be between 1 and 20.

The dispersing agents for interlayer film according to the invention may be obtained as the reaction product of ortho phosphoric acid or polyphosphoric acid with a monohydroxy-compound like polyether-polyester, polyether-polyurethane and/or polyether-polyester-polyurethane. Depending on the stoichiometric ratio of these compounds during reaction, mono- and/or diphosphate ester or mixtures thereof are obtained.

Suitable dispersing agents for carring out the invention are for example "Disperbyk" products available from BYK Chemie GmbH, Gemany.

Another object of the present invention is a multilayer film, consisting at least one layer a) comprising 40 to 80 Wght.% of at least one polyvinyl acetal polymer a', 15 to 40 Wght.% of at least one plasticizer a", 0,01 to 10 Wght.% IR-radiation absorbing particles and 0,1 to 10 Wght.% of at least one mono or dibasic acidic phosphate ester compound as dispersing agent and at least one layer b) comprising of at least one polyvinyl acetal polymer b' and 15 to 40 Wght.% of at least one plasticizer b".

In order to provide a controlled adhesion level of the interlayer film to glass it is preferred to sandwich one layer a) between two layers b), there by avoiding contact of the IR-absorbing particles and the glass surface during lamination process. This can be done easily by multilayer extrusion with for example a feed-block equipment or a multilayer-die.

The polyvinyl acetal polymers a' and b' may comprise one or a mixture of at least two different polyvinyl acetal polymers. The polyvinyl acetal polymers a' and b' may be chemically different or identical. Furthermore, the plasticizer a" and b" may consist of a single compound or a mixture of at least two plasticizes. The plasticizers a" and b" may be chemically different or identical.

In a preferred version of the invention, polyvinyl acetal polymers a' and b' and plasticizer a" and b" are identical and/or the amount of polyvinyl acetal polymers a' and b' and plasticizer a" and b" used in layers a) and b) is the same. In this case, layers a) and b) have a identical composition except the addition of IR-absorbing particles and the dispersing agent in layer a).

In order to reduce the occurrence of haze, the IR-absorbing particles used in the present invention should have a mean diameter of 10 to 300 nm, especially preferred is 30 to 60 nm. The IR-absorbing particles used in the present invention comprise for example indium doped tin oxide (ITO), antimony-doped tin oxide (ATO), aluminium-doped zinc oxide (AZO), anhydrous zinc antimonite (ZnO x Sb₂O₅), Lanthanum hexaboride (LaB6), Cerium hexaboride (CeB₆) and/or Gallium doped zinc oxide (GZO).

Furthermore, the IR-absorbing particles may consist of a single compound or a mixture of at least two IR-absorbing particles.

Especially preferred is the use of IR-radiation absorbing particles comprising (ZnO x Sb₂O₅) in a molar ratio of 0,8 to 1,2 : 1 . Such material is available under the trade name CELNAX CX-Z693M-F from Nissan Chemical Industries, LTD as slurry in methanol.

In sols of IR-radiation absorbing particles especially (ZnO x Sb₂O₅), however, primary particles are flocculated, so that the average particle diameter is about 100 nm or more. Therefore, it is preferable to apply an operation of mechanical pulverization to obtain a dispersion of smaller or more uniform particles. Examples of an apparatus for pulverizing an anhydrous zinc antimonate in a dispersion to disperse minutely include a sand mill, a ball mill, a jet mill, a homogenizer, an attritor, a paint shaker, a high-speed stirrer, an ultrasonic dispersion machine, and a bead mill. Flocculated particles of anhydrous zinc antimonate can be pulverized to disperse by use of such an apparatus. In order to efficiently achieve a small average particle diameter, a bead mill is preferred. In the bead mill, the beads are used to pulverize as the milling media. Therefore, the bead diameter is preferably under 0.2 mm, especially preferred is under 0.1 mm, espercially preferred is under 0.05 mm. If beads having over 0.2 mm diameter are used, the resulting particles may not small enough.

In order to prevent reagglomeration of the particles and to simplify the mixing process with the plasticiser and/or the polymer matrix the milling process may be conducted in presence of the plasticiser and/or the dispersion agent.

Furthermore, the particles may be surface-modified with before or in or after the milling process. The modifier used for modification should enhance the compatibility between the inorganic particles and the organic polymer and the plasticizer.

Suitable modifier are for example siloxane, phosphate ester, alkylamines, silanes, silicates or metaloorganic compounds with alkyl side chains. Especially useful are polyvinyl acetals as modifier, which may be modified on the particles for example in solution in methanol, the plasticizer used and/or the dispersion agent. The polyvinyl acetal used for modifying the particles may be the same or preferred a polyvinyl acetal having lower molecular weight as the polyvinyl acetal used for forming the interlayer film, The modifier may be coated on the particles in an amount of 0,01 to 5 Wght. %, based on the particles.

The polyvinyl acetal used in the present invention is obtained by reaction of polyvinyl alcohol with one or more aldehydes having 1 to 10 carbon atoms. Preferably, butyral aldehyde is used for the production of polyvinyl butyral.

The polyvinyl acetal used in the present invention usually has an amount of polyvinyl alcohol groups of 11 to 22 Wght.% preferable 15 to 21 Wght.%.

The amount of plasticizer in the film should be between 15 and 40 Wght.% (based on the total composition of the film) preferable between 20 and 35 Wght.% . Interlayer films for the invention may comprise a one or more plasticizer known for plastisizing polyvinyl acetales. Especially useful are plasticizer selected from the group consisting of Di-2-ethylhexylsebacate (DOS), Di-2-ethylhexyladipate (DOA), Dihexyladipate (DHA), Dibutylsebacate (DBS), Triethylenglykol-bis-n-heptanoate (3G7), Tetraethylenglykol-bis-n-heptanoate (4G7), Triethylenglykol-bis-2-ethylhexanoate (3G8) Tetraethylenglykol-bis-n-2-ethylhexanoate (4GO bzw. 4G8) Di-2-butoxy-ethyl-adipate (DBEA), Di-2-butoxyethoxyethyladipate (DBEEA) Di-2-butoxyethylsebacate (DBES), Di-2-ethylhexylphthalate (DOP), Di-isononylphthalate (DINP) Triethylenglykol-bis-isononanoate, Triethylenglykol-bis-2-propylhexanoate, Tris(2-ethylhexyl)phosphate (TOF), Di-isononylcyclohexanedicarboxylic ester (DINCH) and Dipropylenglykolbenzoate.

Interlayer films according to the invention may furthermore comprise additives known to a person skilled in the art of laminated glazing. These additives may be for example UV stabilizers, oxidation stabilizers, colours, pigments and adhesion control agents.

As adhesion control agents usually alkaline or earth alkaline salts of organic acids having 1 to 10 carbon atoms are used. Preferable sodium, potassium and/or magnesium salts of formic acid, acetic acids or octanoic acid are used in a total amount of 0.001 to 1 Wght.% based on the total composition of the film.

Further objects of the present invention are processes for the manufacture of the interlayer or multilayer film.

Interlayer or multilayer films according to the invention may be obtained by first dispersing the IR-radiation absorbing particles in the dispersing agent and then extruding the obtained dispersion simultaneously with the polyvinyl acetal and at least one plasticizer. It is also possible to obtain the dispersion of IR-radiation absorbing particles by first mixing at least a part of the plasticizer and the dispersing agent before adding the IR-radiation absorbing particles.

The compounds may be added separately in the feeder of an extruder for mixing and shaping. More preferable, the dispersion of the IR-radiation absorbing particles is first mixed with at least a part of the plasticizer to obtain a second dispersion. The second dispersion is then mixed under extrusion conditions with the polyvinyl acetal and if applicable with the rest of the plasticizer.

Another way to carry out the invention is to first disperse the IR-absorbing particles in the dispersion agent and second, add this dispersion into an already prepared mixture of plasticizer and polyvinyl acetal for example during the extrusion process using a side feeding means of the extruder.

The multilayer film according to the invention may be produced by co-extruding layers a) (containing IR absorbing particles) and b) (containing no IR absorbing particles) in a single extrusion die or feed block equipment. In alternative, layers a) and b) are combined after separate extrusion.

It is furthermore possible to provide multilayer films according to invention with sound damping properties. Such sound damping multilayer film may comprise three layers, wherein the outer layers provide the mechanical stiffness of the film. The core layer is softer than the outer layers and provides sound damping properties. Soft and hard layers can be obtained by using for example polyvinyl acetal with a higher polyvinyl acetate content of 5 to 8 mol % as core layer and polyvinyl acetale with a polyvinyl acetate content of not more than 1 mol% as outer layer. Production of such films and polyvinyl acetals is disclosed in EP 08104948.

### Industrial applicability

Interlayer films having IR-absorbing properties according to the invention are useful for the production of laminated glass, especially for windshields of automobiles or in architectural applications like windows for buildings.

### Examples

The present invention will be described in more detail below with reference to Examples, but the invention is not limited by the Examples. In the following Examples and Comparative Examples, the average particle diameter in dispersion, the visible light transmittance, the solar transmittance and the haze were measured in accordance with the methods described below.

### [Average particle diameter in dispersion]

The average particle diameter in dispersion was measured by using a dynamic light scattering photometer "DLS-7000" manufactured by Otsuka Electronics Co.,Ltd., with He-Ne laser.

### [Visible light transmittance and solar transmittance]

For prepared laminated glass sheets, a transmittance within a wavelength range of from 280 to 2500 nm was measured by using a spectrophotometer "Solid spec 3700" manufactured by Shimadzu Corporation. Then, a visible light transmittance (%) within a range of from 380 to 780 nm was determined according to JIS R3106. Moreover, a solar transmittance (%) within a range of from 300 to 2500 nm was determined using a weighting factor provided in JIS R3106.

### [Haze]

The haze (%) of the prepared laminated glass sheets was measured in accordance with JIS K7105.

### [Electromagnetic wave permeability]

According to electromagnetic wave shielding effectiveness measurement method (Kansai Electronic Industry Development Center method), a reflection loss value was measured within the frequency range of from 10 MHz to 1 GHz, followed by comparing it with the value obtained using 2 mm-thick single glass sheet. Electromagnetic wave permeability was evaluated by performing comparison within the whole frequency range to measure and determining the difference (ΔdB) according to the following criteria.
A: ΔdB is within 5 dB. (passed)
B: ΔdB exceeds 5 dB.

### Example 1

### [Preparation of dispersion]

A dispersion (d1) was obtained by subjecting a 60 wt% methanol dispersion of anhydrous zinc antimonate having a ZnO/Sb2O5 molar ratio of from 0.8 to 1.2 ("CX-Z693M-F" produced by Nissan Chemical Industries, Ltd.) to pulverization treatment with a bead mill (by using 0.05mm-bead). The average particle diameter of anhydrous zinc antimonite was 37nm. A dispersion (d2) was obtained by adding 0.27g dispersion (d1) and 0.032g of a phosphoric acid ester "DISPERBYK 102" (produced by BYK-Chemie GmbH). Moreover, by adding 15.2 g of triethylene glycol-di-2-ethylhexanoate (in the following, abbreviated as 3G8) as a plasticizer while stirring the dispersion (d2), a dispersion (d3) was obtained in which the anhydrous zinc antimonate was dispersed.

### [Manufacture of interlayer film for laminated glass]

The dispersion (d3) prepared as mentioned above was added to 40 g of a polyvinyl butyral (A2) (viscosity average degree of polymerization of starting polyvinyl alcohol = 1700, degree of acetalization = 72 mol%), and then was mixed. The resulting mixture was kneaded in a Labo Plastomill at 170°C and then was press-molded with a pressing machine at 140° C for 5 minutes, thereby manufacturing a 0.76 mm thick interlayer film for laminated glass.

### [Manufacture of laminated glass]

A laminated glass was manufactured by sandwiching the obtained interlayer film for laminated glass between two 2 mm-thick glass sheets (Planilux Clear, produced by Saint Gobain K.K.) and then holding them under reduced pressure at 140° C for 90 minutes.

### Example 2

By adding 5.2 g of 3G8 as a plasticizer while stirring the dispersion (d2) produced in the same manner as in Example 1, a dispersion (d3) was obtained in which the anhydrous zinc antimonate was dispersed and a phosphoric acid ester and the plasticizer were dissolved. The dispersion (d3) was mixed with the mixture of 10 g of plasticizer, 0.18 g of 25 % by weight aqueous solution of magnesium acetate, 0.09 g of 25 % by weight aqueous solution of potassium acetate and 40 g of a polyvinyl butyral (viscosity average degree of polymerization of starting polyvinyl alcohol = 1700, degree of acetalization = 72 mol%). The resulting mixture was molded in the same manner as in Example 1 and a sample was produced. The sample manufacture conditions are shown in Table 1. The obtained interlayer film for laminated glass and the obtained laminated glass were evaluated for their performance and the results are shown in Table 2.

### Example 3

A sample was produced in the same manner as in Example 1, except for adding 0.5g of a dispersion (d1) and 0.1 g of a phosphoric acid ester "DISPERBYK 102" (produced by BYK-Chemie GmbH) added in the preparation of the dispersion (d2). The sample manufacture conditions are shown in Table 1. The obtained interlayer film for laminated glass and the obtained laminated glass were evaluated for their performance and the results are shown in Table 2.

### Example 4

By adding 5.2 g of 3G8 as a plasticizer while stirring the dispersion (d2) produced in the same manner as in Example 1, a dispersion (d3) was obtained in which the anhydrous zinc antimonate was dispersed and a phosphoric acid ester and the plasticizer were dissolved. The dispersion (d3) was mixed with the mixture of 10 g of plasticizer, 0.18 g of 25 % by weight aqueous solution of magnesium acetate, 0.09 g of 25 % by weight aqueous solution of potassium acetate.

This mixture or multiple amounts thereof was added with 40 g of polyvinyl butyral or multiple amounts thereof (viscosity average degree of polymerization of starting polyvinyl alcohol = 1700, degree of acetalization = 72 mol%) in the feeder of a Leistriz twin-screw extruder in an amount to obtain a mixture with 72 Wght% PVB and 28 Wght.% plasticizer and extruded at 220 °C to a film with a thickness of 0,76 mm. The sample manufacture conditions are shown in Table 1. The obtained interlayer film for laminated glass and the obtained laminated glass were evaluated for their performance and the results are shown in Table 2.

### Example 5

A dispersion was prepared as given in Example 4, but using 1.6 g of dispersion (d1) and 0,19 g of "Disperbyk 102" and added to 40 g of polyvinyl butyral or multiple amounts thereof (viscosity average degree of polymerization of starting polyvinyl alcohol = 1700, degree of acetalization = 72 mol%) in the feeder of a Leistriz twin-screw extruder in an amount to obtain a mixture with 72 Wght.% PVB and 28 Wght.% plasticizer and extruded at 220°C to a film with a thickness of 0,120 mm. The obtained interlayer film was sandwiched between two layers of a PVB-film as prepared in Comparative Example 3, but with a film thickness of 0,32 mm to obtain a multilayer film with a total thickness of 0,76 mm. The multilayer film can also be obtained by multilayer extrusion using a second twin-screw extruder and a feedblock or multilayer die. The obtained interlayer film for laminated glass and the obtained laminated glass were evaluated for their performance and the results are shown in Table 2.

### Example 6

A dispersion was prepared as given in Example 5 and added to 40 g of polyvinyl butyral or multiple amounts thereof (viscosity average degree of polymerization of starting polyvinyl alcohol = 1700, degree of acetalization = 78 mol%) in the feeder of Leistritz twin-screw extruder in an amount to obtain a mixture with 65 Wght.% PVB and 35 Wght.% plasticizer and extruded at 220 °C to a film with a thickness of 0,120 mm. The obtained interlayer film was sandwiches between two layers of a PVB-film as prepared in Comparative Example 3, but with a film thickness of 0,32 mm to obtain a multilayer film with a total thickness of 0,76 mm. The multilayer film can also be obtained by multilayer extrusion using a second twin-screw extruder and a feedblock or multilayer die. The obtained interlayer film for laminated glass and the obtained laminated glass were evaluated for their performance and the results are shown in Table 2.

### Comparative Example 1

A sample was produced in the same manner as in Example 1, except for failing to use the methanol dispersion of the anhydrous zinc antimonate. The sample manufacture conditions are shown in Table 1. The obtained interlayer film for laminated glass and the obtained laminated glass were evaluated for their performance and the results are shown in Table 2.

### Comparative Example 2

A sample was produced in the same manner as in Example 1, except for failing to add a phosphoric acid ester. The sample manufacture conditions are shown in Table 1. The obtained interlayer film for laminated glass and the obtained laminated glass were evaluated for their performance and the results are shown in Table 2.

### Comparative Example 3

A sample was produced in the same manner as in Example 4, except for failing to add a phosphoric acid ester and the IR-absorbing particles. The sample manufacture conditions are shown in Table 1. The obtained interlayer film for laminated glass and the obtained laminated glass were evaluated for their performance and the results are shown in Table 2.

### Comparative Example 4

A sample was produced in the same manner as in Example 4, except for failing to add a phosphoric acid ester. The sample manufacture conditions are shown in Table 1. The obtained interlayer film for laminated glass and the obtained laminated glass were evaluated for their performance and the results are shown in Table 2.

### [Evaluation]

The obtained interlayer film for laminated glass and the obtained laminated glass were evaluated and the results are shown in Table 2.

**Table 1**

| Example | PV B | Plasticizer | ZA | DA |
|---|---|---|---|---|
| Example 1 | 100 | 38 | 0.4 | 0.08 |
| Example 2* | 100 | 38 | 0.4 | 0.08 |
| Example 3 | 100 | 38 | 0.75 | 0.25 |
| Example 4* | 100 | 38,8 | 0.75 | 0.25 |
| Example 5 | 100 | 38 | 0.75 | 0.25 |
| Example 6 | 100 | 40 | 0,75 | 0,25 |
| Comparative Example 1 | 100 | 38 | - | 0.08 |
| Comparative Example 2 | 100 | 38 | 0.75 | - |
| Comparative Example 3 | 100 | 38 | - | - |
| Comparative Example 4 | 100 | 38 | 0.75 | - |

Each number in table 1 is in part(s) by 100 parts PVB resin. *: 0.45 parts of 25 wt% aqueous solution of magnesium acetate + 0.23 parts of 25 wt% aqueous solution of potassium acetate added as adhesion control agent.

ZA: zinc antimonite; DA: dispersing agent (DISPERBYK 102)

**Table 2**

| | **Visible light transmittance [%]** | **Solar transmittance [%]** | **Haze [%]** | **Electromagnetic wave permeability** |
|---|---|---|---|---|
| Example 1 | 83 | 68 | 1.0 | A |
| Example 2 | 84 | 70 | 1.0 | A |
| Example 3 | 75 | 54 | 1.4 | A |
| Example 4 | 85 | 65 | 0,3 | A |
| Example 5 | 85 | 65 | 0,6 | A |
| Example 6 | 86 | 68 | 0,2 | A |
| Comp. Ex1 | 88 | 77 | 1.0 | A |
| Comp. Ex2 | 72 | 65 | 32 | A |
| Comp. Ex3 | 88 | 77 | 0,1 | A |
| Comp. Ex4 | 73 | 66 | 25 | A |

As can be seen from table 1 and 2, films according to the invention show high visible light transmittance and low solar transmittance, thereby providing good heat insulation in connection with acceptable haze values.

The films according to the invention have sufficient electromagnetic wave permeability, which is important for the use of interlayer films in automotive windscreens. Comparative examples containing IR-absorbing particles, but without dispersing agent have unacceptable haze and visible light transmittance values, whereas films without IR-absorbing particles and dispersing agent have no heat insulation properties.

## Claims

1. Interlayer film for safety glazing, comprising
- 40 to 80 Wght.% of an least one polyvinyl acetal
- 15 to 35 Wght.% of at least one plasticizer
- 0,01 to 10 Wght.% IR-radiation absorbing particles,
**characterized by** the addition of 0,001 to 10 Wght.% of at least one mono acidic phosphate ester compound and/or dibasic acidic phosphate ester compound as dispersing agent and the IR-absorbing particles comprise ZnO x Sb₂O₅ in a molar ratio of 0,8 to 1,2.

2. Interlayerfilm according to claim 1, **characterized in that** as dispersion agent a compound according to formula I
(HO)₃₋ₓ-P(O)-(OR)ₓ I
with R = a branched or linear, aliphatic or cycloaliphatic hydrocarbon chain containing at least one carboxylic-group and/or at least one ether function and having a molecular weight of 100-10000, and x = 1 or 2 is used.

3. Interlayer film according to claim 1 or 2, **characterized in that** the dispersion agent is the reaction product of the reaction product of ortho phosphoric acid or polyphosphoric acid with a monohydroxy-compound like polyether-polyester, polyether-polyurethane and/or polyether-polyester-polyurethane.

4. Interlayer film for according to any of the claims 1 to 3, **characterized in that** the IR-radiation absorbing particles have a mean diameter of 10 to 300 nm.

5. Multilayer film consisting at least one layer a) comprising 40 to 80 Wght.% of at least one polyvinyl acetal polymer a, 15 to 30 Wght.% of at least one plasticizer a", 0,01 to 10 Wght.% IR-absorbing particles comprising ZnO x Sb₂O₅ in a molar ratio of 0,8 to 1,2 and 0,1 to 10 Wght. % of at least one mono or dibasic acidic phosphate ester compound as dispersing agent and at least one layer b) comprising of at least one polyvinyl acetal polymer b'and 15 to 30 Wght.% of at least one plasticizer b".

6. Multilayer film according to claim 5, **characterized in that** layer a) is sandwiched between two layers b).

7. Multilayer film according to claim 5 or 6, **characterized in that** in layers a) and b) chemically the same polyvinyl acetal is used.

8. Multilayer film according to claim 5 or 6, **characterized in that** in layers a) and b) chemically the same plasticizer is used.

9. Multilayer film according to any of the claims 5 to 8, **characterized in that** in layers a) and b) the same amount of polyvinyl acetal and plasticizer is used.

10. Process for manufacture of an interlayer or multilayer film according to any of the claims 1 to 9, **characterized in that** the IR-radiation absorbing particles are dispersed in the dispersing agent and the obtained dispersion is simultaneously extruded with the polyvinyl acetal and at least one plasticizer.

11. Process for manufacturing of an interlayer or multilayer film according to any of the claims 1 to 9, **characterized in that** the IR-radiation absorbing particles are dispersed in the dispersing agent, the obtained first dispersion is mixed with at least a part of the at least one plasticizer to obtain a second dispersion which is then mixed under extrusion conditions with the polyvinyl acetal and the rest of the at least one plasticizer.

12. Process for manufacturing a multilayer film according to any of the claims 5 to 9 **characterized in that** layers a) and b) are coextruded in a single extrusion die.

13. Process for manufacturing a multilayer film according to any of the claims 5 to 9 **characterized in that** the layers a) and b) are combined after separate extrusion.

## Patentansprüche

1. Zwischenschichtfolie für Sicherheitsverglasung, umfassend
- 40 bis 80 Gew.-% mindestens eines Polyvinylacetals
- 15 bis 35 Gew.-% mindestens eines Weichmachers
- 0,01 bis 10 Gew.-% an IRstrahlungsabsorbierenden Partikeln,
**dadurch gekennzeichnet, dass** 0,001 bis 10 Gew.-% mindestens einer Esterverbindung eines einfach sauren Phosphats und/oder einer zweifach deprotonierten Esterverbindung eines sauren Phosphates als Dispersionsmittel zugesetzt werden und die IR-absorbierenden Partikel ZnO x Sb₂O₅ in einem Molverhältnis von 0,8 bis 1,2 umfassen.

2. Zwischenschichtfolie nach Anspruch 1, **dadurch gekennzeichnet, dass** als Dispersionsmittel eine Verbindung nach Formel I
(HO)₃₋ₓ-P(O)-(OR)ₓ I
wobei R = eine verzweigte oder geradkettige, aliphatische oder cycloaliphatische Kohlenwasserstoffkette, die mindestens eine Carboxylgruppe und/oder mindestens eine funktionelle Ethergruppe enthält und ein Molekulargewicht von 100 bis 10000 hat, und x = 1 oder 2 ist, verwendet wird.

3. Zwischenschichtfolie nach Anspruch 1 oder 2, **dadurch gekennzeichnet, dass** es sich bei dem Dispersionsmittel um das Reaktionsprodukt des Reaktionsproduktes von ortho-Phosphorsäure oder Polyphosphorsäure mit einer Monohydroxyverbindung wie Polyether-Polyester, Polyether-Polyurethan und/oder Polyether-Polyester-Polyurethan handelt.

4. Zwischenschichtfolie nach einem beliebigen der Ansprüche 1 bis 3, **dadurch gekennzeichnet, dass** die IR-absorbierenden Partikel einen mittleren Durchmesser von 10 bis 300 nm haben.

5. Mehrschichtige Folie, die aus mindestens einer Schicht a), die 40 bis 80 Gew.-% mindestens eines Polyvinylacetal-Polymers a, 15 bis 30 Gew.-% mindestens eines Weichmachers a", 0,01 bis 10 Gew.-% an IR-absorbierenden Partikeln, welche ZnO x Sb₂O₅ in einem Molverhältnis von 0,8 bis 1,2 umfassen, und 0,1 bis 10 Gew.-% mindestens einer einfach oder zweifach deprotonierten Esterverbindung eines sauren Phosphats als Dispersionsmittel umfasst, und aus mindestens einer Schicht b), die mindestens ein Polyvinylacetal-Polymer b' und 15 bis 30 Gew.-% mindestens eines Weichmachers b" umfasst, besteht.

6. Mehrschichtige Folie nach Anspruch 5, **dadurch gekennzeichnet, dass** die Schicht a) sandwichartig zwischen zwei Schichten b) liegt.

7. Mehrschichtige Folie nach Anspruch 5 oder 6, **dadurch gekennzeichnet, dass** in den Schichten a) und b) chemisch das gleiche Polyvinylacetal verwendet wird.

8. Mehrschichtige Folie nach Anspruch 5 oder 6, **dadurch gekennzeichnet, dass** in den Schichten a) und b) chemisch der gleiche Weichmacher verwendet wird.

9. Mehrschichtige Folie nach einem beliebigen der Ansprüche 5 bis 8, **dadurch gekennzeichnet, dass** in den Schichten a) und b) dieselbe Menge an Polyvinylacetal und Weichmacher verwendet wird.

10. Verfahren zur Herstellung einer Zwischenschicht- oder einer mehrschichtigen Folie nach einem beliebigen der Ansprüche 1 bis 9, **dadurch gekennzeichnet, dass** die IR-absorbierenden Partikel in dem Dispersionsmittel dispergiert werden und die erhaltene Dispersion gleichzeitig mit dem Polyvinylacetal und mindestens einem Weichmacher extrudiert wird.

11. Verfahren zur Herstellung einer Zwischenschicht- oder einer mehrschichtigen Folie nach einem beliebigen der Ansprüche 1 bis 9, **dadurch gekennzeichnet, dass** die IR-absorbierenden Partikel in dem Dispersionsmittel dispergiert werden, die erhaltene erste Dispersion mit mindestens einem Teil des mindestens einen Weichmachers vermischt wird, um eine zweite Dispersion zu erhalten, welche anschließend unter Extrusionsbedingungen mit dem Polyvinylacetal und dem Rest des mindestens einen Weichmachers vermischt wird.

12. Verfahren zur Herstellung einer mehrschichtigen Folie nach einem beliebigen der Ansprüche 5 bis 9, **dadurch gekennzeichnet, dass** die Schichten a) und b) in ein- und derselben Extrusionsdüse coextrudiert werden.

13. Verfahren zur Herstellung einer mehrschichtigen Folie nach einem beliebigen der Ansprüche 5 bis 9, **dadurch gekennzeichnet, dass** die Schichten a) und b) nach einer getrennten Extrusion kombiniert werden.

## Revendications

1. Film intermédiaire pour vitrage de sécurité, comprenant
- de 40 à 80 % en poids d'au moins un acétal polyvinylique
- de 15 à 35 % en poids d'au moins un plastifiant
- de 0,01 à 10 % en poids de particules d'absorption de rayonnement IR,
**caractérisé par** l'ajout de 0,001 à 10 % en poids d'au moins un composé d'ester de phosphate acide monobasique et/ou un composé d'ester de phosphate acide dibasique en tant qu'agent de dispersion et les particules d'absorption d'IR comprennent ZnO x Sb₂O₅ dans un rapport molaire de 0,8 à 1,2.

2. Film intermédiaire selon la revendication 1, **caractérisé en ce qu'**en tant qu'agent de dispersion, un composé de formule I
(HO)₃₋ₓ-P(O)-(OR)ₓ I
dans laquelle R = chaîne hydrocarbonée aliphatique ou cycloaliphatique, linéaire ou ramifiée contenant au moins un groupe carboxylique et/ou au moins une fonction éther et ayant un poids moléculaire de 100 à 10 000, et x = 1 ou 2, est utilisé.

3. Film intermédiaire selon la revendication 1 ou 2, **caractérisé en ce que** l'agent de dispersion est le produit de réaction du produit de réaction d'un acide orthophosphorique ou d'un acide polyphosphorique avec un composé monohydroxy de type polyéther-polyester, polyéther-polyuréthane et/ou polyéther-polyester-polyuréthane.

4. Film intermédiaire selon l'une quelconque des revendications 1 à 3, **caractérisé en ce que** les particules d'absorption de rayonnement IR ont un diamètre moyen de 10 à 300 nm.

5. Film multicouche se composant d'au moins une couche a) comprenant de 40 à 80 % en poids d'au moins un polymère d'acétal polyvinylique a, de 15 à 30 % en poids d'au moins un plastifiant a " , de 0,01 à 10 % en poids de particules d'absorption d' IR comprenant ZnO x Sb₂O₅ dans un rapport molaire de 0,8 à 1,2 et de 0,1 à 10 % en poids d'au moins un composé d'ester de phosphate acide mono ou dibasique en tant qu'agent de dispersion et au moins une couche b) comprenant au moins un polymère d'acétal polyvinylique b' et de 15 à 30 % en poids d'au moins un plastifiant b " .

6. Film multicouche selon la revendication 5, **caractérisé en ce que** la couche a) est intercalée entre deux couches b).

7. Film multicouche selon la revendication 5 ou 6, **caractérisé en ce que** dans les couches a) et b) chimiquement le même acétal polyvinylique est utilisé.

8. Film multicouche selon la revendication 5 ou 6, **caractérisé en ce que** dans les couches a) et b) chimiquement le même plastifiant est utilisé.

9. Film multicouche selon l'une quelconque des revendications 5 à 8, **caractérisé en ce que** dans les couches a) et b), la même quantité d'acétal polyvinylique et de plastifiant est utilisée.

10. Procédé de fabrication d'un film intermédiaire ou multicouche selon l'une quelconque des revendications 1 à 9, **caractérisé en ce que** les particules d'absorption de rayonnement IR sont dispersées dans l'agent de dispersion et la dispersion obtenue est simultanément extrudée avec l'acétal polyvinylique et au moins un plastifiant.

11. Procédé de fabrication d'un film intermédiaire ou multicouche selon l'une quelconque des revendications 1 à 9, **caractérisé en ce que** les particules d'absorption de rayonnement IR sont dispersées dans l'agent de dispersion, la première dispersion obtenue est mélangée avec au moins une partie de l'au moins un plastifiant pour obtenir une seconde dispersion qui est ensuite mélangée dans des conditions d'extrusion avec l'acétal polyvinylique et le reste de l'au moins un plastifiant.

12. Procédé de fabrication d'un film multicouche selon l'une quelconque des revendications 5 à 9, **caractérisé en ce que** les couches a) et b) sont coextrudées dans une filière d'extrusion unique.

13. Procédé de fabrication d'un film multicouche selon l'une quelconque des revendications 5 à 9, **caractérisé en ce que** les couches a) et b) sont combinées après une extrusion séparée.
